# EUROPEAN PATENT APPLICATION

(11) **EP 1 744 319 A2**
(43) Date of publication of application: **17.01.2007**
(21) Application number: 05255996.0
(22) Date of filing: 27.09.2005
(51) Int. Cl.: G11B 33/10, G11B 33/02

(54) **Portable DVD player with pop-up screen**

(30) Priority: 06.07.2005 CN 200520060765
(71) Applicant: Silicon Pyramid Electron Ltd., Guangzhou (CN)
(72) Inventor: Hsing, Chen Kuo, Zhongshan Road, Guangzhou (CN)
(74) Representative: Piésold, Alexander James

(57) **Abstract**

This new utility model is a portable DVD player with movable display screen consisting of a main body (1) and a cover (2). The cover is connected to the main body, and on the upper side of the cover is the display screen (3) that is flexibly connected to the cover. The cover has grooves (4) in the upper side in which the display screen is movably embedded. The surface of the display screen is at the same level as that of the upper side of the cover. The display screen of this portable DVD player can be adjusted into desired angles, so you just need to place this player on a fixed surface and can easily adjust the visual angle between 0° and 99°, as desired, thus saving you the trouble to hold the DVD player with your hands or support it with something else.

## Description

The invention relates to a DVD player, particularly, a Portable DVD player with a movable or pop-up display screen.

Existing portable DVD players are available in various models, but their display screens are generally set on the inner sides of the covers, and users have to lift the covers to watch their programs. To save that trouble, a portable DVD player with LCD described in a Chinese new utility model that this Applicant claims under Chinese Patent No. 200420088714.4, has its LCD set at the same level as that of the upper side of the cover, so that users can directly watch programs without lifting the cover. However, the player (including the LCD) has to be kept at a certain slanting angle, so that the users can watch programs comfortably. For this purpose, the DVD player must be held or supported by something else when it is used. A solution to this problem would be welcomed by the industry.

At least in its preferred embodiments the present invention provides an easy to use portable DVD player with a movable display screen that can be popped-up for easy viewing while being supported on its base. Thus, it is essentially a'hands-free" device.

Viewed from one aspect, the invention provides a portable DVD player with movable display or pop-up screen comprising a main body and cover. The cover is connected to the main body, and on the upper side of the cover is the display screen that is flexibly connected to the cover.

The display screen is preferably hinged to the cover on one side, and is preferably connected to the main body through connection wires.

The cover preferably has grooves in its upper side and the display screen can movably be embedded into the grooves. When in this position, the surface of the display screen is at the same level as that of the upper side of the cover, There are preferably column shaped projections at both ends of one side of the display screen, and there are preferably positioning holes in the sides of the grooves in the upper side of the cover. The projections preferably extend into the positioning holes to form a hinge structure.

The column shaped projections at one end of the display screen are preferably fitted with reed springs, which are wedged into the cover and provide the force to turn and lift the display screen.

The column shaped projections at the other end of the display screen preferably serve as embedding bolts, which are socketed through threads into a fixing piece, plain washer, spring washer and nuts. The nuts press the fixing piece connected to the cover through the plain washer and spring washer.

The aforementioned construction exerts a limiting action on the rotation of the display screen, and works with the reed springs at the other end of the screen to stop the display screen from further turning when it turns to a certain angle. Through manual adjustment, the display screen can be stopped at will within a specific angular range.

In one preferred embodiment, inside the grooves is the display screen locking structure that consists of an elastic retractable component fixed on the sides of the grooves that coacts with a fixing slot on the side of the display screen. The elastic retractable component consists of the push button, retractable tongue and spring. The push button and retractable tongue are connected through a relative sliding slant face, and the retractable tongue is connected at one end to one end of a spring, and connected at its other end to the cover. When the push button is pressed, the slant face of the push button presses against the slant face of the retractable tongue and acts to slide relatively, thus making the retractable tongue extend into and withdraw from the fixing slot at the side of the display screen.

The retractable tongue thus moves along a direction normal to the pressing direction, thus locking or unlocking the display screen relative to the cover.

In another preferred embodiment the display screen of this portable DVD player can also be designed into a structure that does not automatically pop-up. In such a case, no elastic member is connected to the column shaped projections at one end of the display screen. Provision is made so the display screen can be lifted directly to watch programs. To accomplish this, the grooves are provided with depressions, and a user can extend their fingers into the depressions to lift the display screen.

The display screen is preferably an LCD.

The portable DVD player may be round as shown, elliptical, rectangular (or square), triangular or polygonal as desired.

This new portable DVD player provides an improvement over the existing technologies for the following reasons: The display screen of this portable DVD player can be adjusted into desired angles, so that a user needs to place this player on a fixed surface and easily adjust the visual angle between 0°~90°. This saves the trouble of having to hold the DVD player with their hands or support it in some other manner.

Certain preferred embodiments will now be described, by way of example only, with reference to the accompanying drawings, in which:
Figure 1 shows a top plan perspective view of a portable pop-up DVD player according to the invention;
Figure 2 shows the structure of the back of the cover of the DVD player of Figure 1;
Figure 3 shows an exploded perspective view of the back of the cover shown in Figure 2;
Figure 4 shows a portable DVD player according to the invention in the pop-up position; and
Figure 5 shows another embodiment of the portable pop-up DVD player.

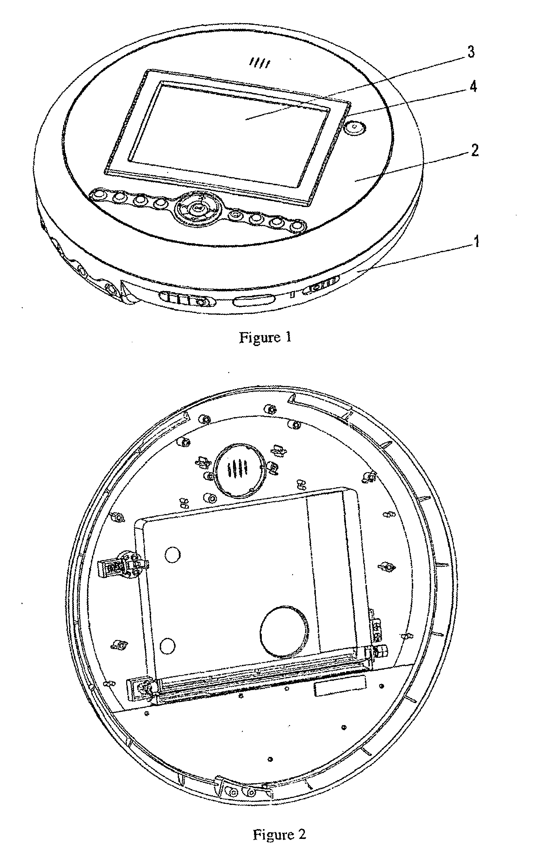

Figure 1 shows the outline a new portable DVD player with a pop-up screen according to the invention. This portable DVD player is round in appearance and consists of the main body 1 and cover 2. The cover 2 is connected to the main body 1, and on the upper side of the cover 2 is the LCD 3. The cover 2 has grooves 4 in the upper side. The LCD 3 is movable and can be embedded into the grooves 4. The surface of the LCD 3 when closed is at the same level as that of the upper side of the cover 2. The LCD 3 is connected to the main body 1 through connection wires (not shown in the figures).

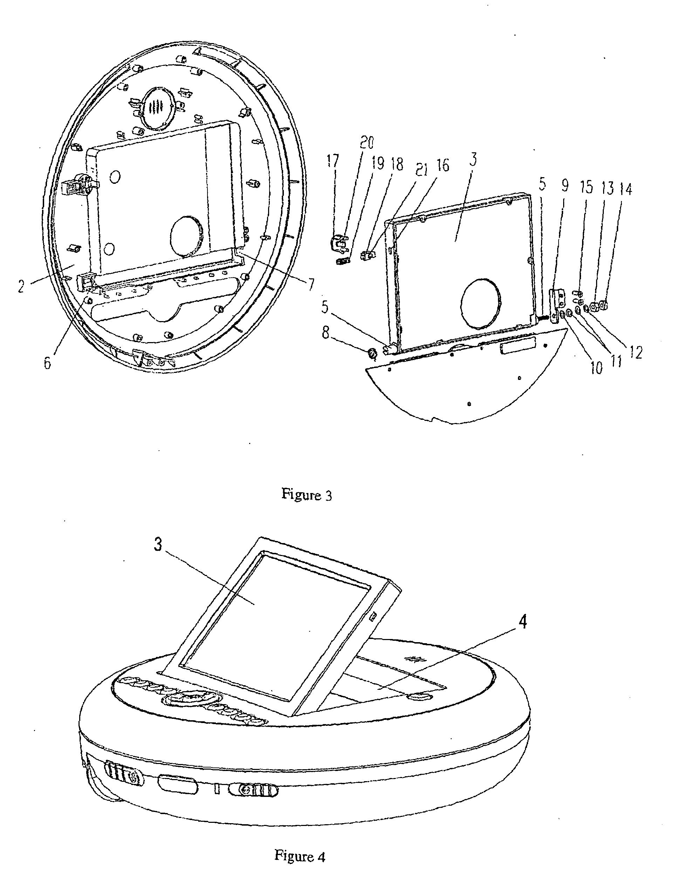

The LCD is flexibly hinged to the cover at one side, as illustrated in Figures 2 & 3. The hinge mechanism includes column shaped projections 5 at both ends of the lower side of the LCD 3. The cover is provided with positioning holes 6 & 7 in the sides of the grooves 4 in the upper side of the cover 2. The projections 5 extend into the positioning holes 6 & 7 to form a hinge structure. The column shaped projections 5 at one end of the LCD 3 are fitted with reed springs 8, that are wedged into the cover 2 and provide the force to pivot the LCD 3 in an upward direction. The column shaped projections 5 at the other end of the LCD 3 serve as embedding bolts, that are socketed through threads into the fixing piece 9, plain washer 10, spring washers 11, plain washer 12 and two nuts 13 & 14. The two nuts 13 & 14 press a fixing piece 9 through the plain washers 10 & 12 and spring washers 11. The fixing piece 9 is connected to the cover 2 through the screw 15, to exert a limiting action on the rotation of the LCD 3. This works in conjunction with the reed springs 8 at the other end to retain the LCD 3 after it turns to a certain angle through manual adjustment.

The LCD 3 can be stopped at will within a specific angular range (0°-90°), as shown in Figure 4. Inside the grooves 4 of the cover 2 are the LCD locking structure (as shown in figures 2 & 3), which consists of an elastic retractable component fixed on the sides of the grooves 4 that works in conjunction with a fixing slot 16 on the side of the LCD 3. The elastic retractable component consists of the push button 17, retractable tongue 18 and, spring 19. The push button 17 and retractable tongue 18 are connected through relative sliding slant faces 20 & 21 (set at push button 17 and retractable tongue 18 respectively). The retractable tongue 18 is connected at one end to one end of the spring 19, and connected at the other end to the cover 2. When the push button 17 is pressed, the slant face 20 of the push button 17 presses against the slant face 21 of the retractable tongue 18. The relative movement causes the retractable tongue 18 to extend into and withdraw from the fixing slot 16 at the side of the LCD 3 along the direction normal to the pressing direction. This movement brings about the locking or unlocking of the pop-up screen relative to the main body of the portable DVD player.

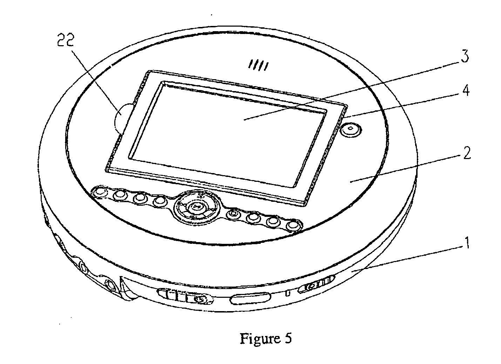

A second embodiment of applicant's invention is shown in Figure 5.

This embodiment is similar to that of Figures 1-4, but does not provide for the display screen to automatically pop-up in response to the unlocking of the lock mechanism.

There is no elastic member, such as a reed spring, connected to the column-shaped projections at one end of the LCD3.

The structure of the other end is the same as in the first embodiment. The locking and unlocking of the mechanism of the screen relative to the cover remains the same. However, to raise the screen manually the grooves 4 are provided with depressions 22 at one side or both sides into which a user can extend their fingers to lift the LCD 3 to watch programs. The LCD 3 can be moved and fixed at a desired angle (0°~90°) as in the first embodiment to help the user better enjoy the programs.

The above examples show several embodiments of the portable DVD player with a pop-up screen. However, it is intended to cover by the appended claims all embodiments that fall within the scope of the invention.

## Claims

1. A portable DVD player with a movable display screen comprising a main body (1), a cover (2), means for connecting the cover to the main body, a display screen assembly (3) in said cover (2) and means for flexibly connecting the screen (3) to the cover (2).

2. A portable DVD player as claimed in claim 1, wherein the means for connecting the screen to said cover comprises cooperating hinge means defined by said display screen assembly (3) and said cover (2) and the display screen is in communication with said body through suitable connections.

3. The portable DVD player as claimed in claim 1 or 2, wherein the cover (2) comprises grooves (4) in its upper side for receiving said display screen (3) such that when the screen (3) is disposed in said grooves (4) it is at the same level as said cover (2).

4. A portable DVD player as claimed in claim 2 or 3, wherein the hinge means comprises column shaped projections (5) extending from both ends of the display screen (3) and the cover (2) defines positioning holes (6,7) in said grooves to receive said projections (5) whereby the display screen (3) can be moved to the desired position relative to the cover (2).

5. A portable DVD player as claimed in claim 4, wherein resilient means are provided for normally biasing the display screen (3) in an upward direction out of said grooves (4).

6. A portable DVD player as claimed in claim 5, wherein the resilient means comprise a reed spring (8) interconnecting one of said columns (5) and said cover (2) to normally act to bias said display screen (3) in an upward direction.

7. portable DVD player as claimed in claim 6, wherein means are provided adjacent the other of said columns (5) for providing a fixing piece (9) connected to the cover (2) for controlling the position of the display screen (3) relative to the cover (2).

8. A portable DVD player as claimed in any preceding claim, including means for locking the display screen (3) in position relative to said cover (2), said locking means including an elastic retractable push button (17) assembly that comprises a retractable tongue (18) connected at one end to a spring (19) and the other end connected to the cover (12) in which the spring normally acts to move the tongue (18) in a locking position and the push button (17) moves the tongue (18) in an unlocking direction to permit the display screen (3) to move upwardly.

9. The portable DVD player as claimed in any of claims 1 to 4, wherein the grooves (4) in said cover (2) define depressions (22) adjacent said display screen (3) whereby the display screen (3) can be moved manually relative to said cover (2).

10. A portable DVD player comprising a main body (1), a cover (2), and a display screen (3) connected to said cover such that it can move relative to said cover between a stowed position in which it is held within said cover and a popped-up position in which it extends upwardly relative to said cover.
